Europäisches Patentamt

European Patent Office

Office européen des brevets

(11) Veröffentlichungsnummer: **0 266 609**

**A1**

(12) **EUROPÄISCHE PATENTANMELDUNG**

(21) Anmeldenummer: 87115230.2

(22) Anmeldetag: 17.10.87

(51) Int. Cl.⁴: **A47B 96/20** , B21D 53/74 , B23D 45/14 , B23D 45/10 , A47B 67/00

(30) Priorität: 06.11.86 DE 3637908
20.12.86 DE 3643741

(43) Veröffentlichungstag der Anmeldung:
11.05.88 Patentblatt 88/19

(84) Benannte Vertragsstaaten:
AT CH DE ES FR GB IT LI SE

(71) Anmelder: Baus, Heinz Georg
Wartbodenstrasse 35
CH-3626 Hünibach-Thun(CH)

(72) Erfinder: Baus, Heinz Georg
Wartbodenstrasse 35
CH-3626 Hünibach-Thun(CH)

(74) Vertreter: Klose, Hans, Dipl.-Phys. et al
Kurfürstenstrasse 32
D-6700 Ludwigshafen(DE)

(54) **Schrank, insbesondere Badezimmerschrank.**

(57) Die Erfindung betrifft einen Schrank, insbesondere einen Badezimmerschrank mit einem Gehäuse aus wenigstens zwei Profilteilen (34, 36), die in einem Eckbereich unter einem Winkel (40) kleiner 180° miteinander verbunden sind. Die Profilteile (34, 36) sind bevorzugt als stranggepreßte Hohlprofile aus Aluminium oder einer Aluminiumlegierung ausgebildet. Der Schrank soll mit einem geringen Fertigungsaufwand kostengünstig herstellbar sein. Es wird vorgeschlagen, daß die Profilteile (34, 36) aus einer einzigen, zunächst geraden Profilschiene (2) bestehen. in welche zur Erzeugung des Eckbereiches (40) von der Innenseite (14) her wenigstens ein Schnitt (4) eingebracht worden ist. Zwischen den in gewünschten Winkeln zueinander gebogenen Profilteilen (34, 36) ist an der Außenseite (8) ein durchgehender, die Profilteile (34, 36) verbindender Steg (32) vorhanden. In jedem Eckbereich sind zweckmäßig eine Anzahl von Zwischenteilen (38). die ebenfalls einstückig aus der gleichen Profilschiene (2) gefertigt sind, vorhanden.

Fig. 2

## Schrank, insbesondere Badezimmerschrank

Die Erfindung betrifft einen Schrank, insbesondere Badezimmerschrank mit einem Rahmen aus wenigsten zwei Profilteilen, die in einem Eckbereich unter einem Winkel kleiner 180° miteinander verbunden und bevorzugt als stranggepreßte Hohlprofile aus Aluminium oder einer Aluminiumlegierung ausgebildet sind.

In der DE-OS 30 48 332 ist ein derartiger Schrank beschrieben, dessen Rahmen aus insgesamt vier rechtwinklig zueinander angeordneten Profilteilen aufgebaut ist. In den vier Eckbereichen sind jeweils zwei dieser Profilteile mittels Eckverbindern miteinander verbunden. Derartige Profilteile bestehen regelmäßig aus Aluminium-Hohlprofilen, die bei der Fertigung von einer praktisch im Endlosverfahren gefertigten langen Profilschiene auf Maß abgeschnitten werden und danach mittels den Eckverbindern in dem geforderten rechten Winkel wieder miteinander verbunden werden. Der insoweit erforderliche Fertigungs-und Montageaufwand ist nicht unerheblich. Besonders aufwendig wird ein solcher Schrank, wenn der Rahmen nicht nur vier Eckbereiche von jeweils 90 Winkelgraden aufweist, sondern beispielsweise als Oktagon ausgebildet ist und somit insgesamt acht Eckbereiche aufweist.

Aus der US-PS 33 15 834 ist ein Gehäuse, beispielsweise einer Schublade, nachgewiesen. Es ist ein Rahmen mit einem im wesentlichen U-förmigen Querschnitt vorhanden, der einen nach außen sichtbaren dekorativen Streifen enthält. In den Eckbereichen ist jeweils ein dreieckförmiger Schlitz in dem dekorativen Streifen sowie in dem Rahmen vorgesehen, wobei nach dem Einschneiden die Biegung entsprechend dem geforderten Winkel des Eckbereiches vorgenommen wird. In den Eckbereichen besteht eine Verbindung nur über relativ schmale, an der Außenseite befindliche Teile, zwischen welchen der genannte dekorative Streifen vorgesehen ist. Die Stabilität des Gehäuses wird maßgeblich durch eine Bodenplatte und eine Deckenplatte erreicht, welche in geeigneter Weise mit dem genannten Rahmen verbunden sind. Die genannten Platten und deren Verbindung mit dem Rahmen erfordern einen entsprechenden Material-und Fertigungsaufwand. Ohne die genannten Platten weist hingegen das Gehäuse aufgrund der genannten Schlitze in den Eckbereichen, in welchen nur die schmalen Stege und der dekorative Streifen vorhanden sind, nur eine geringe Stabilität auf und kann daher nicht ohne weiteres für einen Schrank vorgesehen werden.

Aus der DE-OS 28 30 935 sind Bauelemente bekannt, die aus ebenen Platten hergestellt sind. Zur Erzeugung der Eckbereiche werden die Platten vollständig durchschnitten, wobei zuvor zur Fixierung der Teile an der Außenseite ein Klebeband angebracht wurde, das nachfolgend auch als Kantenschutz dienen kann. Die derart getrennten Teile der Platte werden nachfolgend gefaltet und mittels eines Klebers oder dergleichen in der gewünschten Winkellage miteinander verbunden. Das Klebeband dient zur Fixierung der aufgrund der durchgehenden Schlitze völlig voneinander getrennten Teile der Platte. Die Stabilität des derart gefertigten Bauelementes hängt maßgeblich von der Festigkeit der Klebeverbindung ab, zumal nach dem Falten der Teile die genannten Klebebänder wieder entfernt werden.

Ferner ist aus der FR-OS 24 09 855 ein vorgefertigtes Element nachgewiesen, das einen äußeren Mantel und im Inneren desselben eine Isolationsschicht aus Steinwolle aufweist. In diese Isolationsschicht sind von der Innenseite her Schnitte eingebracht, so daß nach dem Biegen des Mantels entsprechend der gewünschten Kontur die Innenseite der Isolationsschicht im wesentlichen wieder geschlossen erscheint. Die Stabilität des Elementes wird ausschließlich durch den Mantel vorgegeben, der in der gewünschten Weise gebogen wird, ohne daß in den Mantel selbst Schnitte eingebracht werden. Der Mantel besteht aus einem vergleichsweise dünnen Metallblech, das in der geforderten Weise gebogen werden kann.

Der Erfindung liegt die Aufgabe zugrunde, einen Schrank der genannten Art dahingehend weiterzubilden, daß bei geringem Fertigungs-und Montageaufwand Eckverbinder eingespart werden können und gleichwohl eine gute Stabilität und Verwindungssteifigkeit des Schrankes gewährleistet wird. Der Schrank soll einen funktionsgerechten Aufbau aufweisen, wobei eine gute Stabilität mit geringem Materialaufwand erreicht werden soll. Ferner soll der Winkel im Eckbereich zwischen den genannten Teilen in einfacher Weise vorgebbar sein. Desweiteren sollen Schränke, die mehr als vier Eckbereiche aufweisen, problemlos und bei einem ansprechenden Design herzustellen sein. Der Herstellungs-und Montageaufwand sollen reduziert werden, wobei zusätzliche Verbindungsmittel entfallen sollen.

Zur Lösung dieser Aufgabe wird vorgeschlagen, daß die Profilteile aus einer einzigen, zunächst geraden Profilschiene bestehen, in welche zur Erzeugung der Eckbereiche von der Innenseite her jeweils wenigstens ein Schnitt eingebracht worden ist, und daß an der Außenseite im Eckbereich ein durchgehender, die Profilteile verbindender Steg vorhanden ist.

Der erfindungsgemäße Schrank zeichnet sich durch eine einfache Konstruktion aus und kann mit geringem Fertigungs-und Mon tageaufwand hergestellt werden. Besondere Eckverbinder mit Schrauben, Zapfen o.ä. sind nicht erforderlich, da die in einem Winkel zueinander angeordneten Profilteile aus einer einzigen Profilschiene bestehen. Die Profilteile werden nicht durch vollständiges Durchtrennen einer geraden Profilschiene erzeugt und nachfolgend mittels Eckverbindern wieder zusammengesetzt. Vielmehr wird im Eckbereich von der Innenseite her wenigstens ein Konterschnitt eingebracht, wobei erfindungsgemäß an der Außenseite ein die Profilteile noch verbindende Steg stehen bleibt. Nachfolgend wird die Profilschiene derart gebogen, daß die Profilteile die gewünschte Winkelstellung kleiner als 180° zueinander einnehmen. So kann erfindungsgemäß ein Schrank aus einer einzigen Profilschiene gefertigt sein, welche jeweils in den Eckbereichen an der Innenseite die Konterschnitte aufweist. Der erfindungsgemäße Schrank ist an seiner Außenseite vollständig geschlossen und es ist nur eine einzige Verbindungsstelle zwischen den Enden der derart gebogenen Profilschiene erforderlich. Die Enden der zu einem Rechteck oder zu einem Polygon geformten Profilschiene sind erfindungsgemäß durch Verbindungsmittel verbunden, wobei nur eine einzige solche Verbindungsstelle erforderlich ist. Selbstverständlich kann der erfindungsgemäße Schrank, und zwar vor allem in Abhängigkeit von dessen Gesamtgröße, aus mehreren in der vorgeschlagenen Weise mit Schnitten versehenen und nachträglich gebogenen Profilschienen aufgebaut sein.

Als besonders bedeutsam hat sich das Einbringen der erfindungsgemäßen Schnitte nach dem dreistufigen Konterschnittverfahren erwiesen. Hierbei wird eine Gratbildung durch das Aufteilen des Schneidvorganges in drei Schritte, Ausschneiden, Gegenschneiden und Durchschneiden mit jeweils gegenläufiger Arbeitsbewegung vermieden. In überaus zweckmäßiger Weise wird das Entgraten nach dem Einschneiden folglich vermieden. Vor dem Biegen weisen die Konterschnitte eine V-förmige Kontur auf und nach dem Biegen sind erfindungsgemäß die beiden Seitenflächen des jeweiligen Konterschnittes im wesentlichen parallel und/oder nahe beieinander angeordnet.

Ist die Profilschiene als ein Hohlprofil ausgebildet, so werden die Schnitte in der Weise eingebracht, daß an der Außenseite die Wandstärke des Hohlprofiles im wesentlichen unverändert bleibt und nicht durchgetrennt wird. Mit anderen Worten, die Schnitt-Tiefe des oder der Schnitte ist erfindungsgemäß im wesentlichen gleich groß wie die Gesamtdicke des Hohlprofils abzüglich der Wandstärke der Außenwand. Im Rahmen der Erfindung kann aber die Außenwand des Hohlprofils durch den Schnitt oder Konterschnitt auch noch geringfügig eingeritzt werden, so daß dort exakt die Biegezone des Hohlprofiles definiert ist; diese Maßnahme ist abhängig von der Dicke der Außenwand. Die erfindungsgemäße Profilschiene besteht aus Aluminium oder einer Aluminiumlegierung und wird erst nach dem Einbringen des Konterschnittes und dem Biegen eloxiert. Damit wird auch im Bereich der Biegezone ein zuverlässiger Oberflächenschutz gewährleistet.

Die Erfindung betrifft ferner ein Verfahren zur Herstellung eines derartigen Schrankes und/oder von Profilteilen, die einen vorgegebenen Winkel zueinander aufweisen sollen. Das Verfahren soll mit geringem Aufwand und mit einfachen Maschinen durchgeführt werden. Es wird vorgeschlagen, daß die gerade Profilschiene zunächst auf einen planen Maschinentisch befestigt wird, daß nachfolgend der oder die Konterschnitte mit einer vorgegebenen Schnitt-Tiefe kleiner als die Gesamtdicke der Profilschiene eingebracht werden und daß schließlich durch Biegen die derart hergestellten und an der Außenseite über einen Steg miteinander noch verbundenen Profilteile in die geforderte Winkelstellung zueinander gebracht werden. Der apparative Aufwand zur Realisierung des erfindungsgemäßen Verfahrens ist gering, zumal ein Schnitt insbesondere durch Einsägen oder durch Fräsen der auf einem Maschinentisch festgespannten Profilschiene eingebracht wird. Wesentlich ist ferner das Einbringen der Schnitte in der Weise, daß eine Gratbildung vermieden wird. Insbesondere nach dem dreistufigen Konterschneidverfahren werden unerwünschte Grate im Bereich der Schneidzone vermieden und eine Nachbehandlung der Profilschiene entfällt insoweit. Das Einsägen erfolgt im Rahmen dieser Erfindung zweckmäßigerweise mit mehreren Sägeblättern, die zur Erzeugung der V-förmigen Kontur entsprechend bezüglich der durch den Maschinentisch vorgegeben Ebene geneigt angeordnet sind. Im Rahmen der Erfindung erfolgt das Eloxieren nach dem Einbringen des oder der Konterschnitte, dem Erzeugen von hakenartigen Vorsprüngen und dem Biegen der Profilschiene zu dem kompletten Rahmen, wodurch ein zuverlässiger Oberflächenschutz auch und gerade im Bereich der Biegezonen gewährleistet wird. Aufgrund des nachträglichen Eloxierens wird ferner die Gefahr einer Oberflächenbeschädigung bei Durchführung des erfindungsgemäßen Verfahrens oder allgemein beim Zusammenbau des Schrankes praktisch ausgeschlossen.

In einer besonderen Ausgestaltung werden die Seitenflächen der V-förmigen Schnitte vor dem Biegen der Profilschiene mit hakenartigen Vorsprüngen versehen, wobei nach dem Biegen die Vorsprünge der gegenüberliegenden Seitenflächen ineinanderhaken und eine im wesentlichen geschlossene Oberfläche bilden. Die hakenartige Vorsprünge werden mit Preßwerkzeugen hergestellt, die zumindest im Bereich der Vorderseite der Profilschiene angreifen. Hierbei fließt im Bereich der Seiten-oder Schnittflächen durch Kaltverformung Material in Richtung zur Mittenebene des V-förmigen Schnittes wodurch die genannten Haken oder Vorsprünge gebildet werden. Die hierbei zum Einsatz gelangenden Preßwerkzeuge sind im Bereich der Seitenflächen konisch ausgebildet und beim Zusamenpressen von Stempeln der Preßwerkzeuge oder dergleichen beginnt das Material zu fließen, um die erfindungsgemäßen Haken zu bilden. Wird nachfolgend die Profilschiene gebogen, so werden die Haken der gegenüberliegenden Seitenflächen des jeweiligen V-förmigen Schnittes aneinandergepreßt und verhaken, wodurch eine durchgehende Verbindung zwischen den Seitenflächen erzeugt wird. Hierdurch wird eine im wesentlichen geschlossene Oberfläche geschaffen, wobei ggf. über die Oberfläche vorstehende Teile der Haken im Rahmen der Erfindung durch Schleifen oder Polieren nachfolgend egalisiert werden. Nach der Oberflächenbehandlung, und zwar vor allem Eloxieren oder Lackieren, ist eine Schnittlinie praktisch nicht mehr wahrnehmbar. Das Preß werkzeug enthält einen Stempel oder dergleichen, welcher durch die breite Öffnung von der Innenseite der Profilschiene her eingeführt wird. Anschließend wird der Stempel im Inneren der Profilschiene in Richtung zur Vorderkante bewegt, wobei die Profilschiene mit der Vorderkante an einem zweiten Stempel zur Anlage gebracht wird. Dieser zweite Stempel weist im Schnittbereich eine konisch zur Vorderkante vorstehende Fläche auf, so daß beim Gegeneinanderpreßen der beiden Stempel das Material der Profilschiene im Bereich der Schnittflächen deformiert wird und die Haken bildet.

Die Erfindung wird nachfolgend anhand der in der Zeichnung dargestellten Ausführungsbeispiele näher erläutert. Es zeigen:

Fig. 1 eine seitliche Ansicht der Gehäuse Profilschiene vor dem Biegen,

Fig. 2 die Profilschiene gemäß Fig. 1 nach dem Biegen,

Fig. 3 ein Schnitt entlang der Schnittlinie III gemäß Fig.2,

Fig. 4 schematisch eine Ansicht eines Schrankes,

Fig. 5 vergrößert eine Ansicht der Vorderkante der Profilschiene im Bereich eines V-Schnittes,

Fig. 6 einen Schnitt entlang Schnittlinie VI gemäß Fig. 5,

Fig. 7 einen Schnitt entlang Schnittlinie VII gemäß Fig. 6,

Fig. 8 - 10 in schematischen Darstellung die drei Sägeblätter zur Erzeugung eines V-förmigen Schnittes,

Fig. 11 eine schematische Ansicht von insgesamt fünf Sägeblättern, die in Schneidrichtung hintereinander angeordnet sind,

Fig. 12 eine Ansicht einer Profilschiene, die in einem Eckbereich bereits gebogen ist,

Fig. 13, 14 Ansichten von zwei erfindungsgemäßen Spiegelschränken.

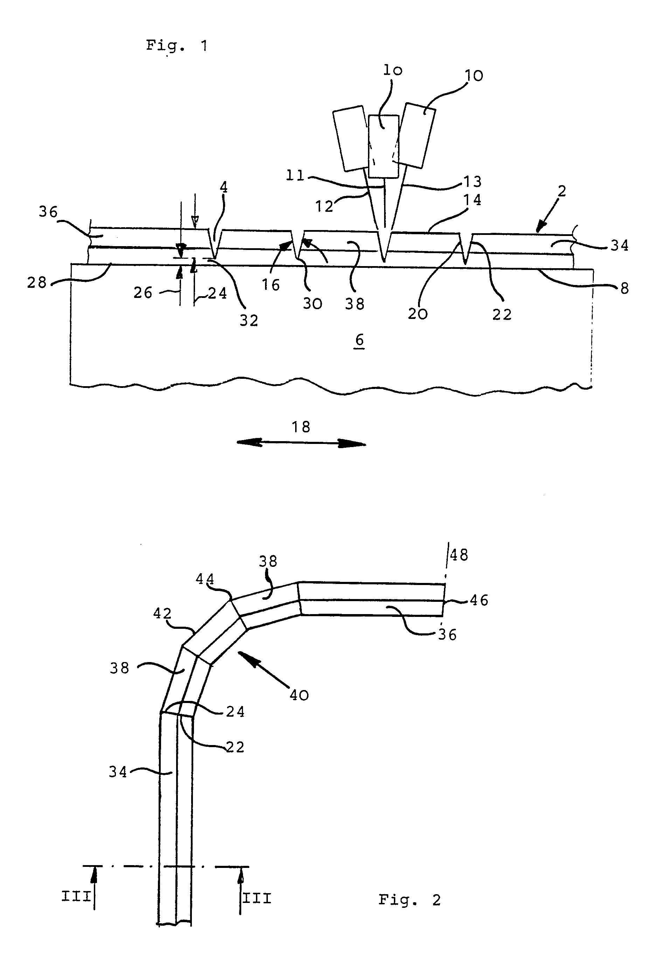

Figur 1 zeigt eine seitliche Ansicht der Profilschiene 2, aus welcher das Gehäuse bzw. der Rahmen eines Schrankes gefertigt wird. Die Profilschiene 2 ist als ein Hohlprofil ausgebildet und besteht aus Aluminium oder einer Legierung desselben. Die Gesamtlänge der Profilschiene ist im wesentlichen gleich groß wie der Umfang des zu fertigenden Gehäuses bzw. Rahmens eines Schrankes. Ein derartiger Schrank weist bei Ausbildung als Badezimmerschrank regelmäßig Spiegeltüren auf, die als Schiebetüren oder auch als - schwenkbare Türen ausgebildet und angeordnet sind. Ferner kann der erfindungsgemäße Schrank als Regel ohne Türen ausgebildet sein. Zum Einbringen von Schnitten, insbesondere Konterschnitten,4 in die Profilschiene 2 ist diese auf einem Maschinentisch 6 mittels hier nicht weiter dargestellten Spannelementen oder dergleichen befestigt. Die Profilschiene 2 liegt mit ihrer Außenseite 8 plan auf dem Maschinentisch 6 auf. Mittels Werkzeugen 10, die hier nur schematisch angedeutet sind, werden die erfindungsgemäßen V-förmigen Konterschnitte 4 in die Innenseite 14 der Profilschiene 2 eingebracht. Es sind bei dieser wesentlichen Ausgestaltung insgesamt drei Werkzeuge 10 vorgesehen, die als motorbetriebenes Sägen ausgebildet sind. Das Sägeblatt 11 des mittleren Werkzeuges ist senkrecht zum Maschinentisch 6 und zur Profilschiene 2 angeordnet. Die beiden äußeren Werkzeuge bzw. deren Sägeblätter 12, 13 sind entsprechend dem Öffnungswinkel 16 des Konterschnittes 4 schräg gestellt, wobei das mittlere Sägeblatt 11 in der Winkelhalbierenden bzw. der Symmetrieebene sich befindet. Die Werkzeuge 10 sowie der Maschinentisch 6 sind relativ zueinander in gewohnter Weise auf Schlitten verfahrbar und einstellbar, um in Längsrichtung 18 der Profilschiene 2 beabstandet und quer zu dieser die Konterschnitte 4 in die Profilschiene 2 einzubringen. Eine Gratbildung in den Schnittzonen wird vermieden.

Die Sägeblätter 11 bis 13 weisen zur jeweiligen Schneidebene geschränkt angeordnete Schneidzähne auf, um erfindungsgemäß die V-förmige Kontur der Konterschnitte 4 präzise zu erhalten. Die sich quer zur Längsrichtung 18 erstreckenden Konterschnitte 4 weisen jeweils unter dem Winkel 16 zueinander geneigt angeordnete Seitenflächen 20, 22 auf. Die Schnitt-Tiefe 24 plus die Dicke 26 der Außenwand 28 sind im wesentlichen gleich groß wie die Gesamtdicke der Profilschiene 2. Mit anderen Worten, die Spitze 30 des Konterschnittes 4 erreicht im wesentlichen die innere Oberfläche der Außenwand 30. Ferner kann im Rahmen dieser Erfindung die Spitze 30 auch um einen vorgebbaren kleinen Betrag in die Außenwand 28 noch hineinreichen, um das nachfolgend zu erläuternde Biegen, soweit erforderlich zu erleichtern; diese Maßnahme ist abhängig von der Dicke 26 der Außenwand 28. In jedem Falle bleibt im Bereich jedes Konterschnittes 4 unterhalb dessen Spitze 30 ein über die gesamte Breite der Profilschiene 2 sich erstreckender Steg 32 stehen, über welchen die Profilteile 34, 36, sowie die Zwischenteile 38 nach wie vor fest miteinander verbunden sind.

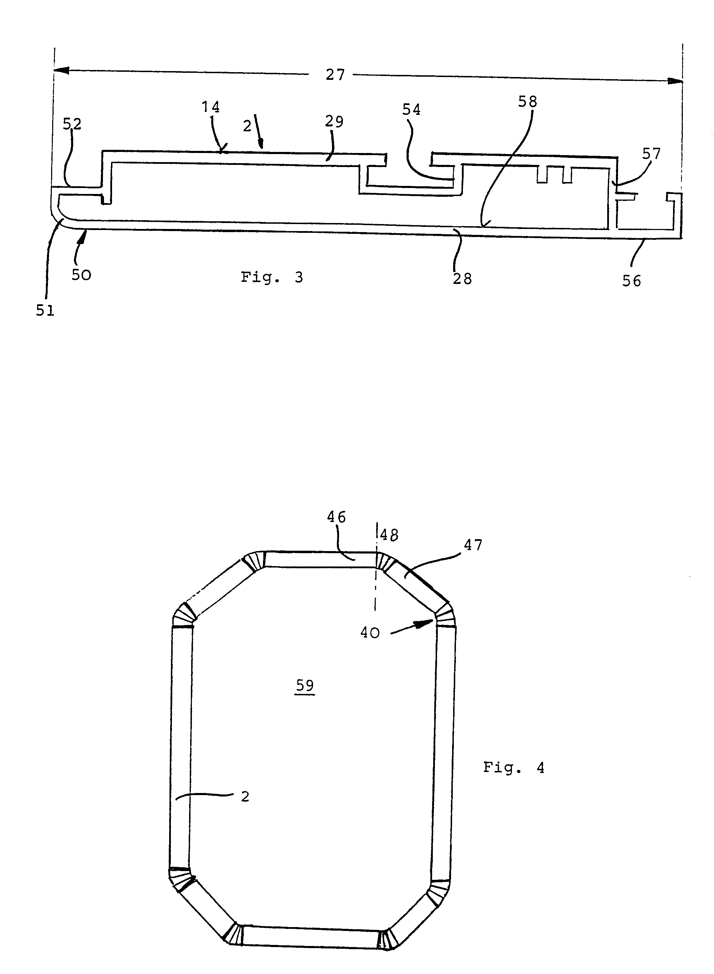

Figur 2 zeigt die Profilschiene von Figur 1 nach dem Biegen, wobei nunmehr die Seitenflächen 20, 22 parallel und dicht beieinander liegen. Die Profilteile 34, 36 stehen zueinander im rechten Winkel und die drei Zwischenteile 38 sind im Eckbereich 40 einem Bogen angenähert, dicht nebeneinander angeordnet. Die Außenkanten 42 sind erfindungsgemäß gerade und bilden einen Polygonzug. Die oben erläuterten Stege sind in den Biegezonen 44, wie dargestellt, gebogen und stellen eine durchgehende Verbindung zwischen den Profilteilen 34, 36 sowie den Zwischenteilen 38 her. Bei rechteckförmiger Kontur des Schrankes sind entsprechend noch drei weitere derartige Eckbereiche vorhanden, wobei das gesamte Gehäuse des Schrankes aus einer einzigen Profilschiene hergestellt ist. Das gerade Ende 46 vom Profilteil 34 kann in einfacher Weise ebenfalls mit einem hier nicht dargestellten geraden Ende derselben Profilschine verbunden sein. Im Rahmen der Erfindung hat es sich als besonders zweckmäßig erwiesen, das Ende 46 unmittelbar anschließend an einen weiteren Eckbereich 41 vorzusehen und die Verbindungsebene 48 an diesen weiteren Eckbereich 41 unmittelbar anschließend vorzusehen. Selbstverständlich kann im Rahmen dieser Erfindung die Verbindungsebene auch in einem Eckbereich sich befinden. Maßgebend ist insoweit, daß die Verbindungsebene der Enden der Profilschiene einem der Eckbereiche zugeordnet ist und sich nicht in einem der geraden Profilteile befindet.

Figur 3 zeigt einen Schnitt entlang der Schnittlinie III gemäß Figur 2. Wie ersichtlich, ist die Profilschiene 2 als ein Hohlprofil ausgebildet. An der Vorderseite 50 der Profilschiene und somit auch des fertigen Schrankes befindet sich eine vordere Verbindungswand 51 mit einer Stufe 52, in deren Bereich die Türen des Schrankes angeordnet sind. Ferner weist die Profilschiene 2 in der Innenwand 29 eine hinterschnittene Nut 54 auf, die zur Befestigung von Bodenträgern oder dergleichen für Zwischenböden im Schrank dient. An der Rückseite 56 kann eine Rückwand des Schrankes befestigt werden. Über eine hintere Verbindungswand 57 ist die Außenwand 28 mit der Innenwand 29 verbunden. Die Schnitt-Tiefe der oben erläuterten Konterschnitte reicht bis an und bevorzugt auch etwas in die innere Oberfläche 58 der Außenwand 28. Erfindungsgemäß werden die Schnitte 4 von der Vorderseite 50 her nach hinten zur Rückseite 56 hin eingebracht und/oder sie erstrecken sich über die gesamte Breite 27 der durchgehenden Außenwand 28. Die erfindungsgemäßen Stege 32 erstrecken sich im wesentlichen über die gesamte Breite der Profilschiene. Die Innenwand 29 und ferner die Verbindungswände 51, 57 werden vollständig durchschnitten, während die Außenwand über ihre gesamte, durchgehende Breite den Verbindungssteg im Schnittbereich bildet.

Figur 4 zeigt schematisch eine Ansicht eines kompletten Schrankes, der in der erfindungsgemäßen Weise aus einer einzigen Profilschiene 2 gefertigt ist und eine Rückwand 59 aufweist. Der Schrank weist insgesamt acht Eckbereiche auf, wobei die Verbindungsebene 48 zwischen den Enden 46 und 47 der Profilschiene in einem der Eckbereiche 40 angeordnet ist. Wesentlich ist ferner, daß die aus Aluminium oder einer Aluminiumlegierung gefertigte Profilschiene erst nach dem Biegen entsprechend der gewünschten Form des Gehäuses bzw. Schrankes einem Verfahren zur Oberflächenbehandlung, und zwar insbesondere einem Eloxierverfahren, unterworfen wird.

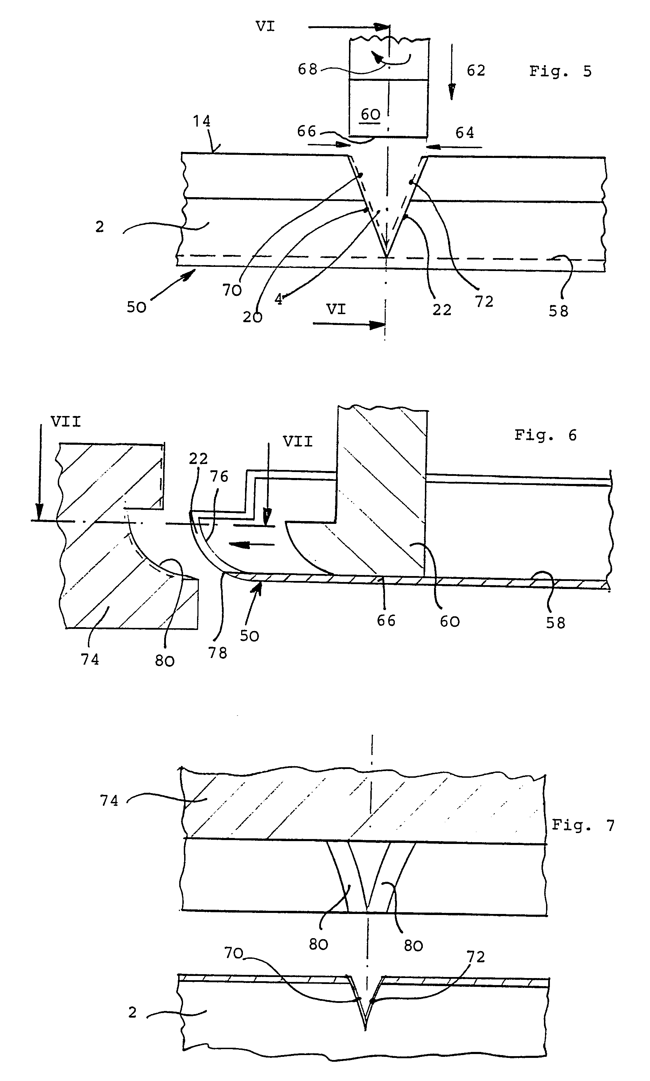

Figur 5 zeigt in Vergrößerung eine Ansicht auf die Profilschiene 2 ähnlich der von Figur 3, und zwar im Bereich der Vorderseite bei einem V-Schnitt 4. Es ist ein erster Stempel 60 eines Preßwerkzeuges schematisch dargestellt, welcher Stempel 60 in Richtung des Pfeiles 62 durch die breite Öffnung 64 an der Innenseite 14 in die Profilschiene 2 eingeführt werden kann. Nach dem Einführen liegt der Stempel 60 mit der Anlagefläche 66 auf der inneren Oberfläche 58 der Profilschiene 2. Nach dem Einführen vom Stempel 60 folgt eine Relativbewegung zwischen Stempel 60 und Profilschiene im wesentlichen senkrecht zur Zeichenebene derart, daß der Stempel an der der Vorderseite 50 zugeordneten Innenfläche der Profilschiene 2 anliegt. Gegebenenfalls kann im Rahmen dieser Erfindung der Stempel 60 nach dem Einbringen in die Profilschiene 2 um einen Winkel von insbesondere 90° gedreht werden, wie es durch den Pfeil 68 angedeutet ist. Der Stempel kann hierbei eine Breite aufweisen, die kleiner als die Breite der Öffnung 64 ist; die Tiefe des Stempels kann bei dieser besonderen Ausgestaltung auch größer als die Breite der Öffnung 64 sein, so daß nach dem Drehen des Stempels der im Inneren der Profilschiene befindliche Teil an der Innenfläche in einem Bereich anliegt, der größer ist als die genannte Breite der Öffnung 64.

An den Seitenflächen 20, 22 des V-Schnittes 4 sind vergrößert hakenartige Vorsprünge 70, 72 dargestellt, die in der Praxis etwa 0,5 mm über die Seitenflächen 20, 22 vorstehen. Diese Vorsprünge 70, 72 werden, wie nachfolgend zu erläutern ist, im Zusammenwirken mit einem weiteren Stempel des Preßwerkzeuges hergestellt. Nach dem oben bereits erläuterten Biegen der Profilschiene liegen die Seitenflächen 20, 22 nahe beieinander und die Haken bzw. Vorsprünge 70, 72 greifen ineinander. Nach dem Biegen wird zweckmäßig durch Schleifen oder Polieren die Schnittzone bearbeitet, so daß eventuell über die Oberfläche hervorstehende Teile der Haken zurückgedrückt und/oder abgeschliffen werden. Im Bereich der Schnittzone ist eine im wesentlichen geschlossene Oberfläche wiederhergestellt und nach dem Lackieren oder Eloxieren ist der Schnitt praktisch nicht mehr zu erkennen. Das Eindringen von Schmutz in das Innere wird vermieden und durch die geschlossene Oberfläche wird ein ansprechendes Design erzielt. Die oben anhand von Figur 2 und Figur 4 dargestellten Schnittlinien im Bereich der Seitenflächen 20, 22 sind von einem Betrachter nicht mehr wahrzunehmen.

Figur 6 zeigt einen Schnitt entlang Schnittlinie VI gemäß Figur 5, wobei nunmehr auch der zweite Stempel 74 des Preßwerkzeuges zu erkennen ist. Im Inneren der Profilschiene 2 ist der erste Stempel 60 in der abgesenkten Position dargestellt, in welcher die Anlagefläche 66 auf der inneren Oberfläche 58 aufliegt. Die beiden Stempel 60, 74 weisen im Rahmen dieser Erfindung an die Innenfläche 76 bzw. Außenfläche 78 im Bereich der Vorderseite 50 weitgehend angepaßte Konturen auf. Wesentlich ist darüber hinaus die konische Ausbildung insbesondere des zweiten Stempels 74 im Bereich des V-förmigen Schnittes in der Weise, daß konische in Richtung zur Profilschiene vorstehende Flächenteile 80 vorhanden sind.

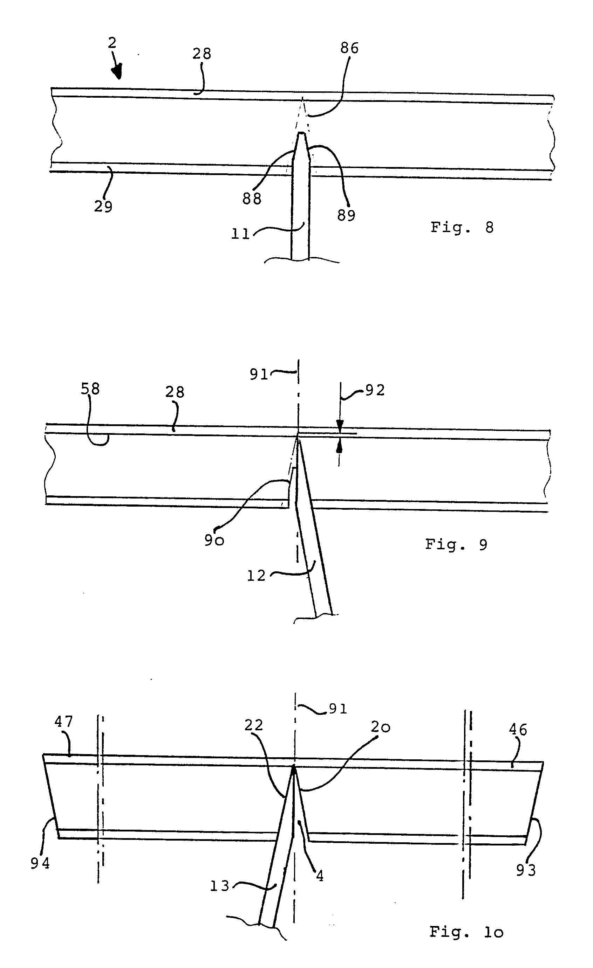

Figur 7 zeigt einen Schnitt entlang Schnittlinie VII von Figur 6 und die konischen Flächenteile 80 des zweiten Stempels 74 sind gut zu erkennen. Die Flächenteile 80 sind entsprechend der gebogenen Außenkontur der Profilschiene 2 angeordnet. In der Zeichnung sind die konischen Flächenteile 80 zwecks klarer Darstellung stark vergrößert dargestellt. In der Praxis ist die Höhe 82, mit welcher der erfindungsgemäße Flächenteil maximal über der Stempelfläche vorsteht etwa 0,4 mm groß, während die Breite 84 in der Größenordnung zwischen 5 und 8 mm liegt. Beim Pressen der Profilschiene zwischen den beiden Stempeln beginnt das Material im Bereich der Seitenflächen 20, 22 der Profilschiene in Folge des wirksamen Druckes zu fließen, wodurch die hakenartige Vorsprünge 70, 72 gebildet werden.

Fig. 8 zeigt schematisch die Anordnung der mittleren Säge mit dem Sägeblatt 11, um in die Profilschiene 2 einen ersten Vorschnitt einzubringen. Im Unterschied zu Fig. 1 sägt hierbei das Sägeblatt 11 von unten her in die Profilschiene 2 ein. Das Sägeblatt steht orthogonal zur Profilschiene 2, welche senkrecht zur Zeichenebene bezüglich des Sägeblattes mit einem hier nicht weiter dargestellten Schlitten bewegt wird. Das mittlere Sägeblatt 11 sägt noch nicht vollständig den mittels den strichpunktierten Linien 86 angedeuteten V-förmigen Schnitt. Die Flanken 88, 89 des Sägeblattes 11 weisen vielmehr zu den Linien 86 und folglich zu den zu fertigenden Seitenflächen des Schnittes noch einen vorgegebenen kleinen Abstand im Rahmen dieser Erfindung auf. Das Sägeblatt 11 sägt erfindungsgemäß die Profilschiene 2 nur bis zur halben Strecke zwischen der Innenwand 29 und der Außenwand 28 durch.

In Fig. 9 ist der eine Teil der Schnittkante 90 des mittleren Sägeblattes noch zu erkennen. Ferner ist das zweite Sägeblatt 12, das zur Mittenebene 91 erfindungsgemäß geneigt angeordnet ist, gut zu erkennen. Mit dem Sägeblatt 12 wird die endgültige Schnittiefe bis zur Außenwand 28 erreicht. Wie ersichtlich, wird mit der Spitze des Sägeblattes 12 in die innere Oberfläche 58 ein kleiner Schnitt 92 eingebracht, der nur einen kleinen Betrag der Gesamtmaterialdicke der Außenwand 28 groß ist. Mit diesem kleinen Schnitt 92 wird eine definierte Biegezone gewährleistet.

Fig. 10 zeigt schließlich das dritte Sägeblatt 13, das ebenfalls zur Mittenebene 91 geneigt angeordnet ist, allerdings in der anderen Richtung als das oben erläuterte zweite Sägeblatt. Mit dem dritten Sägeblatt 13 wird der V-förmige Schnitt 4 und ebenso auch der an der Spitze desselben befindliche kleine Schnitt 92 vervollständigt.

In Fig. 10 sind auch die Enden 46, 47 der Profilschiene 2 dargestellt. Erfindungsgemäß sind auch die Endflächen 93, 94 in der gleichen Weise geneigt angeordnet, wie die Seitenflächen 20, 22 der Schnitte. Es sei an dieser Stelle ausdrücklich festgehalten, daß sämtliche Schnitte in die Profilschiene mit den gleichen Werkzeugen eingebracht werden und daß jeweils die Öffnungswinkel aller Schnitte einer Profilschiene erfindungsgemäß gleich groß sind.

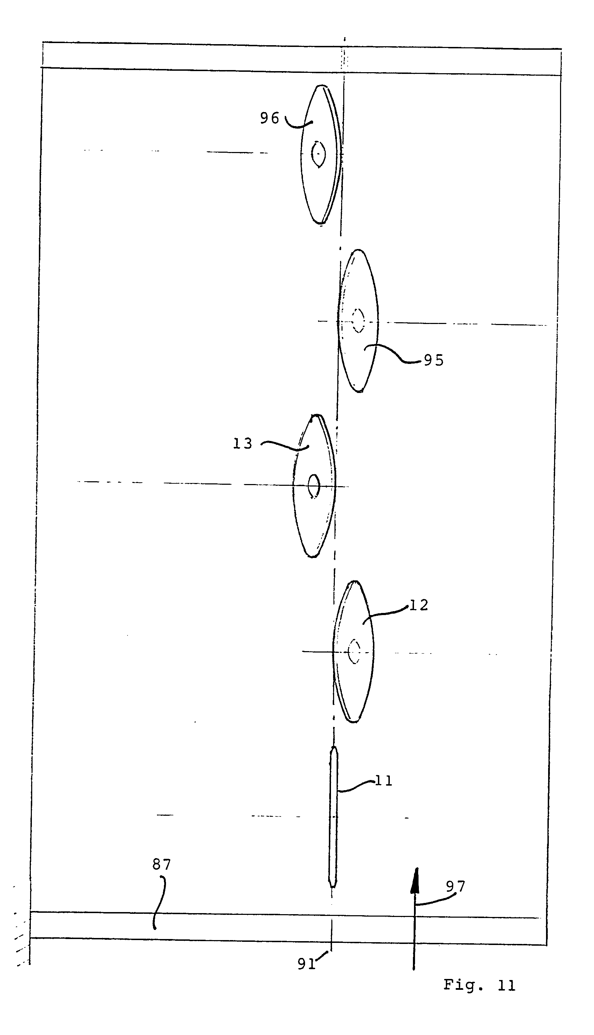

Fig. 11 zeigt schematisch eine Ansicht auf insgesamt fünf Sägeblätter, und zwar die bereits erläuterten Sägeblätter 11 bis 13 sowie zwei weitere Sägeblätter 95, 96. Die genannten Sägeblätter sind in Schneidrichtung hintereinander und in definierten Abständen sowie in definierter Winkellage zur Mittenebene 91 in einem Maschinenrahmen 87 angeordnet. Der Pfeil 97 zeigt die Bewegungsrichtung der Profilschiene relativ zu den Sägeblättern 11 bis 13 sowie 95, 96, welche in definierten Abständen zueinander angeordnet sind, so daß die einzelnen Schnitte erfindungsgemäß nacheinander erfolgen. Wie oben bereits dargelegt, kann grundsätzlich mit den drei Sägeblättern 11 bis 13 ein V-förmiger Schnitt in die Profilschiene eingebracht werden. Um eine hohe Schnittgüte und Genauigkeit zu erzielen, sind die beiden weiteren Sägeblätter 95, 96 vorgesehen. Nunmehr dienen auch die beiden Sägeblätter 12, 13 zum Einbringen eines Vorschnittes und mit den Sägeblättern 95, 96 wird schließlich mit hoher Präzision der Schnitt fertiggestellt. Die Materialabnahme mit den beiden Sägeblättern 95, 96 ist wesentlich geringer als mit den Sägeblättern 12, 13, so daß sehr exakte und saubere Schnittflächen gewährleistet werden. Im Rahmen der Erfindung ist es darüberhinaus von besonderer Bedeutung, die Profilschiene von der Vorderseite her beginnend zur Rückseite hin durchzuschneiden. Dies hat den nicht unwesentlichen Vorteil, daß im Bereich der Vorderseit eventuelle Grate in den Innenteil des Hohlraumes der Profilschiene hineinragen und nicht weitere stören.

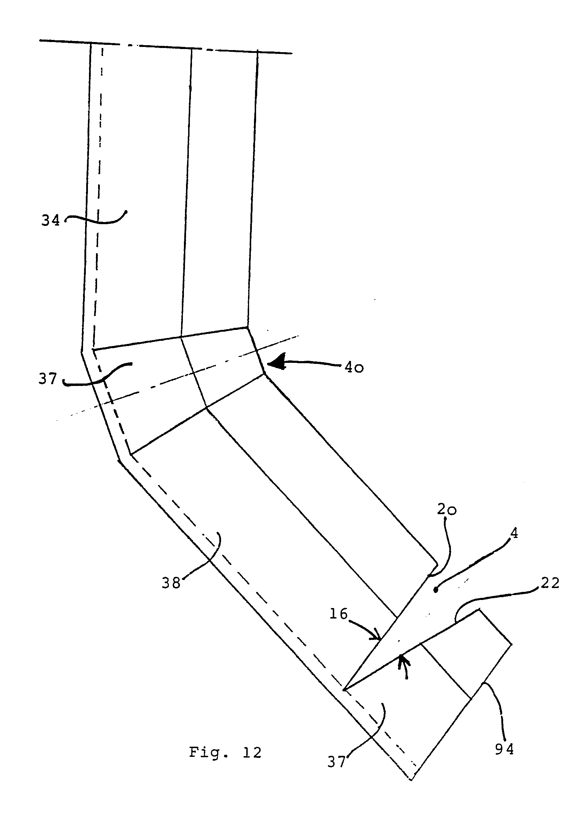

Fig. 12 zeigt teilweise eine Profilschiene, die bereits in einem Eckbereich 40 gebogen ist. Wie ersichtlich, ist dieser Eckbereich 40 mittels zwei Schnitten erzeugt, zwischen welchen ein gerades Zwischenteil 37 vorhanden ist. Anschließend an diesen Eckbereich 40 ist ein weiterer Zwischenteil 38 vorhanden, der größer ist als der Zwischenteil 37 des Eckbereiches. Der noch sichtbare Schnitt 4 weist einen Öffnungswinkel 16 von 22,5° auf und die Endfläche 94 ist um den halben Winkelbetrag zur Mitten-bzw. Endebene geneigt. Es sei festgehalten, daß sämtliche Schnitte der Profilschiene mit den gleichen Werkzeugen eingebracht werden, so daß die einander entsprechenden Seitenflächen auch immer die gleiche Neigung bezüglich der Profilschiene aufweisen.

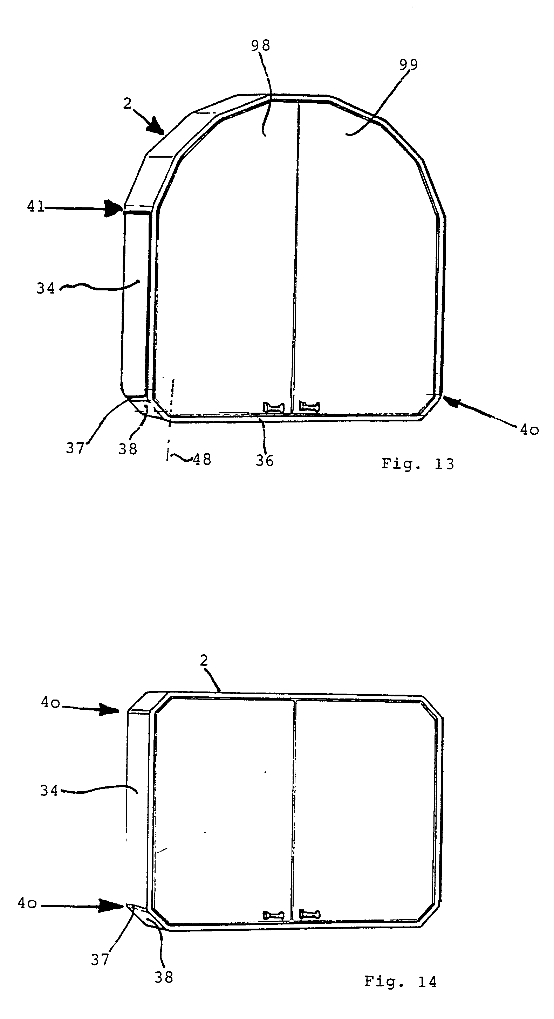

Fig. 13 zeigt einen Spiegelschrank, dessen Rahmen aus einer Profilschiene erfindungsgemäß hergestellt ist. An der Vorderseite weist der Spiegelschrank zwei Spiegeltüren 98, 99 auf, die in hier nicht weiter zu erläuternder Weise mit den Scharnieren an dem Rahmen bzw. der Profilschiene 2 angelenkt sind. Ähnlich wie in Fig. 12 schließt an das Profilteil 34 ein relativ kleines Mittelteil 37 und an dieses ein vergleichsweise großes Mittelteil 38 an. Da im Eckbereich 40 zwei Schnitte von jeweils 22,5° vorgesehen sind, nimmt der Zwischenteil 38 zum vertikalen Profilteil 34 einen Winkel von 45° ein. Der obere Teil des Schrankes ist zu einen Polygonzug ausgebildet, wobei insgesamt acht Schnitte von jeweils 22,5° vorgesehen waren und entsprechend die Profilschiene gebogen werden konnte. Es sei festgehalten, daß der Rahmen aus einer einzigen Profilschiene gefertigt ist, wobei sämtliche Schnitte die gleichen Öffnungswinkel aufweisen und wobei lediglich in der Verbindungsebene 48 geeignete Verbindungsmittel vorgesehen sind. Wie bereits erwähnt, sind auch die Endflächen der Profilschienen geneigt, so daß die Verbindungsebene 48 nicht senkrecht zu dem hier unteren Profilteil 36 steht, sondern um den halben Öffnungswinkel geneigt angeordnet ist, wie es sich in Verbindung mit Fig. 10 oder 12 unmittelbar ergibt.

Fig. 14 zeigt eine andere Ausgestaltung eines Spiegelschrankes, der insgesamt acht übereinstimmend ausgebildete Eckbereiche 40 aufweist. Auch hier befinden sich an der Vorderseite des Spiegelschrankes zwei Spiegeltüren, die in geeigneter Weise an der zu dem Rahmen gebogenen Profilschiene 2 angelenkt sind.


Bezugszeichenliste

2 Profilschiene
4 Schnitt
6 Maschinentisch
8 Außenseite
10 Werkzeug
11 - 13 Sägeblatt
14 Innenseite
16 Winkel
18 Längsrichtung
20, 22 Seitenfläche
24 Schnitt-Tiefe
26 Dicke
27 Breite von 2
28 Außenwand
29 Innenwand
30 Spitze
32 Steg
34, 36 Profilteil
37, 38 Zwischenteil
40, 41 Eckbereich
42 Außenkante
44 Biegezone
46. 47 Ende
48 Verbindungsebene
50 Vorderseite
51 vordere Verbindungswand
52 Stufe
54 Nut
56 Rückseite
57 hintere Verbindungswand
58 innere Oberfläche
59 Rückwand
60 erster Stempel
62 Pfeil
64 breite Öffnung

66 Anlagefläche
68 Pfeil
70, 72 Vorsprung
74 zweiter Stempel
76 Innenfläche
78 Außenfläche
80 konischer Flächenteil
82 Höhe
84 Breite
86 Linie
87 Maschinenrahmen
88, 89 Flanke
90 Schnittkante
91 Mittenebene
92 kleiner Schnitt
93, 94 Endflächen
95, 96 Sägeblatt
97 Pfeil
98, 99 Spiegeltür

## Ansprüche

1. Schrank, insbesondere Badezimmerschrank, mit einem Rahmen aus wenigstens zwei Profilteilen, die in einem Eckbereich unter einem Winkel kleiner 180° miteinander verbunden und als Hohlprofile, bevorzugt aus Aluminium oder einer Aluminiumlegierung, ausgebildet sind,
dadurch gekennzeichnet, daß die Profilteile (34, 36) aus einer einzigen, zunächst geraden Profilschiene (2) bestehen, in welche zur Erzeugung des Eckbereiches (40, 41) von der Innenseite (14) her wenigstens ein Schnitt (4) bis zur Außenwand (28) eingebracht worden ist,
daß an der Außenseite (8) im Eckbereich (40,41) ein durchgehender, die Profilteile (34, 36) verbindender Steg (32) vorhanden ist,
und daß der Steg (32) sich über die gesamte Breite (27) der Außenwand (28) erstreckt.

2. Schrank nach Anspruch 1,
dadurch gekennzeichnet, daß die Seitenflächen (20, 22) des Schnittes (4) im wesentlichen V-förmig angeordnet sind, wobei nach dem Biegen die Seitenflächen (20, 22) im wesentlichen parallel und/oder nahe beieinander angeordnet sind, und daß die Öffnungswinkel (16) sämtlicher Schnitte (4) der Profilschiene (2) gleich groß sind.

3. Schrank nach Anspruch 1 oder 2,
dadurch gekennzeichnet, daß an der Außenseite (8) die Dicke (26) der Außenwand (28) im Bereich des Konterschnittes (4) im wesentlichen unverändert ist und/oder daß die Spitze (30) des Schnittes (4) um einen kleinen, vorgebbaren Betrag in die innere Oberfläche (58) in die Außenwand (28) reicht.

4. Schrank nach einem der Ansprüche 1 bis 3, dadurch gekennzeichnet, daß pro Eckbereich (40) wenigstens zwei Schnitte (4) vorgesehen sind und daß das oder die zwischen den geraden Profilteilen (34, 36) vorhandenen Zwischenteile (37, 38) eine im wesentlichen gerade Außenkante (42) aufweisen und einstückig aus der gleichen Profilschiene (2) gefertigt sind.

5. Schrank nach einem der Ansprüche 1 bis 4, dadurch gekennzeichnet, daß die Innenwand (29), eine vordere Verbindungswand (51) sowie eine hintere Verbindungswand (57) der als Hohlkastenprofil ausgebildeten Profilschiene (2) vollständig durchschnitten sind und daß die sich über die gesamte Breite (27) erstreckende Außenwand derart gebogen ist, daß die Seitenflächen (20, 22) dicht beieinanderliegen.

6. Schrank nach einem der Ansprüche 1 bis 5, dadurch gekennzeichnet, daß die Seitenflächen (20, 22) hakenförmige Vorsprünge (70, 72) aufweisen, die ineinandergreifen und eine im wesentlichen geschlossene Oberfläche bilden, und/oder daß die Profilschiene (2) eine vordere Verbindungswand (51) aufweist, welche über eine Stufe (52) zur Innenwand (29) übergeht, wobei die vordere Verbindungswand (51) sowie die Stufe (52) durch den Schnitt (4) vollständig durchtrennt sind.

7. Schrank nach einem der Ansprüche 1 bis 6, dadurch gekennzeichnet, daß die Oberflächenbehandlung, insbesondere das Eloxieren, nach dem Einbringen der Schnitte (4), sowie dem Biegen der Profilschiene (2) vorgenommen wurde und/oder daß der Außenumfang des Schrankes im wesentlichen gleich groß ist wie die Gesamtlänge der Profilschiene (2) vor dem Biegen.

8. Verfahren zum Herstellen eines Schrankes oder eines Gehäuses, insbesondere nach einem der Ansprüche 1 bis 7,
dadurch gekennzeichnet, daß die gerade Profilschiene (2) auf einem planen Maschinentisch (6) befestigt wird, daß nachfolgend der oder die Schnitte (4) für den jeweiligen Eckbereich (40) von der Innenseite (14) mit einer Schnitt-Tiefe (24), die kleiner als die Gesamtdicke der Profilschiene (2) ist, eingebracht werden und daß schließlich durch Biegen die derart hergestellten und an der Außenseite im Bereich des jeweiligen Schnittes (4) über je einen Steg noch verbundenen Profilteile (34, 36) in die erforderliche Winkelstellung zueinander gebracht werden.

9. Verfahren nach Anspruch 8,
dadurch gekennzeichnet, daß pro Eckbereich (40, 41) wenigstens zwei, bevorzugt drei, Schnitte (4) vorgesehen sind und/oder daß bei drei oder mehr Schnitten (4) die zwischen diesen jeweils befindlichen Zwischenteile (38) im wesentlichen gleich groß sind.

10. Verfahren nach Anspruch 8 oder 9, dadurch gekennzeichnet, daß der Schnitt (4) mit einem Werkzeug (10), bevorzugt durch Konterschneiden, von der Innenseite (14) eingebracht und insbesondere eingesägt oder eingefräst werden und/oder daß zunächst die vordere Verbindungswand (51) und nachfolgend die Innenwand (29) bis hin zur hinteren Verbindungswand (57) durchschnitten werden.

11. Verfahren nach einem der Ansprüche 8 bis 10 dadurch gekennzeichnet, daß wenigstens zwei, zweckmäßig drei Werkzeuge (10) vorgesehen werden, deren Sägeblätter (11 bis 13) entsprechend dem Öffnungswinkel (16) des Schnittes (4) bezüglich der Längsrichtung (18) der Profilschiene (2) geneigt angeordnet sind, und/oder daß die Schnitte (4) oder die Schneidwerkzeuge aus unterschiedlichen Richtungen im wesentlichen ohne Gratbildung in die Profilschiene (2) eingebracht werden.

12. Verfahren nach einem der Ansprüche 8 bis 11, dadurch gekennzeichnet, daß über die Schnittflächen (20, 22) mittels Preßwerkzeugen hakenartige Vorsprünge (70, 72) erzeugt werden, die nach dem Biegen ineinandergreifen und eine im wesentlichen geschlossene Oberfläche bilden.

13. Verfahren nach einem der Ansprüche 8 bis 12, dadurch gekennzeichnet, daß durch die Öffnung (64) in der Innenseite (14) der Profilschiene (2) ein erster Stempel (60) in die Profilschiene (2) eingeführt wird und daß die Profilschiene (2) mit der Vorderseite (50) zwischen dem ersten Stempel (60) und einem zweiten Stempel (74) des Preßwerkzeuges gepreßt wird, wobei der zweite Stempel (74) einen konischen und/oder vorstehenden Flächenteil (80) aufweist.

14. Verfahren nach einem der Ansprüche 8 bis 13, dadurch gekennzeichnet, daß der erste Stempel (60) eine an die Innenfläche (76) der Profilschiene (2) angepaßte Kontur und der zweite Stempel (74) eine an die Außenfläche (78) der Profilschiene (2) angepaßte Kontur aufweist, wobei der vorstehende Flächenteil (80) entsprechend dem Öffnungswinkel zwischen den Seitenflächen (20, 22) ausgebildet ist.

15. Verfahren nach einem der Ansprüche 7 bis 14, dadurch gekennzeichnet, daß der Schnitt (4) mit wenigstens drei Werkzeugen bzw. Sägeblättern (11 bis 13), zweckmäßig mit zwei weiteren Sägeblättern (95, 96) eingebracht wird, wobei sämtliche Werkzeuge auf dem gleichen Maschinenrahmen (87) hintereinander angeordnet sind, so daß der Schnitt (4) durch Relativbewegung der Profilschiene (2) und des Maschinenrahmens (87) in einem einzigen Arbeitsgang in die Profilschiene (2) eingebracht wird.

16. Verfahren nach einem der Ansprüche 7 bis 15, dadurch gekennzeichnet, daß zunächst mit einem orthogonal zur Profilschiene (2) stehenden Sägeblatt (11) ein erster Vorschnitt eingebracht wird, dessen Schnittiefe nur einen Teil der endgültigen Schnittiefe des Schnittes (4) beträgt, daß nachfolgend mit zur Profilschiene V-förmig geneigt angeordneten Sägeblättern (12, 13) und ggfs. mit weiteren Sägeblättern (95, 96) der Schnitt (4) über die vollständige Schnittiefe in die Profilschiene (2) eingebracht wird.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Europäisches Patentamt

**EUROPÄISCHER RECHERCHENBERICHT**

Nummer der Anmeldung

EP 87 11 5230

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 429 447 (MARIN) * Figuren 1-3; Seiten 1,2 * | 1-3,8, 10 | A 47 B 96/20 |
| A | | 11,15 | B 21 D 53/74 |
| | --- | | B 23 D 45/14 |
| X | US-A-3 298 097 (GILBERT) * Figuren 1,2; Spalte 2, Zeilen 10-72; Spalte 3; Spalte 4, Zeilen 1-53 * | 1-3,8, 11,15, 16 | B 23 D 45/10 A 47 B 67/00 |
| | --- | | |
| X | FR-A-2 244 430 (PHILIPS' GLOEILAMPENFABRIEKEN N.V.) * Figuren 1,2; Seite 1, Zeilen 31-39; Seite 2, Zeilen 1-29 * | 1-4 | |
| | --- | | |
| X | FR-A-2 359 306 (GROSFILLEX S.A.R.L.) * Figuren 1,2 * | 1-3 | |
| | ----- | | |

**RECHERCHIERTE SACHGEBIETE (Int. Cl.4)**

A 47 B
B 21 D
B 27 H
B 27 F
B 23 D
E 06 B

Der vorliegende Recherchenbericht wurde für alle Patentansprüche erstellt

| Recherchenort | Abschlußdatum der Recherche | Prüfer |
|---|---|---|
| DEN HAAG | 25-01-1988 | NOESEN R.F. |